# EUROPEAN PATENT APPLICATION

(11) **EP 1 724 504 A1**
(43) Date of publication of application: **22.11.2006**
(21) Application number: 06076022.0
(22) Date of filing: 03.05.2006
(51) Int. Cl.: F16K 31/54, G05D 23/19

(54) **Motor actuator for radiator valve**

(30) Priority: 17.05.2005 IT MI20050890
(71) Applicant: Perry Electric S.r.l., Veniano (CO) (IT)
(72) Inventor: Galimberti, Roberto, 20052 Monza (MI) (IT)
(74) Representative: Raimondi, Margherita

(57) **Abstract**

Device for controlling and actuating the piston of valves for shutting off the aperture supplying a fluid, comprising a container (10) provided with a connecting part (11) able to be fitted to said valve, an electric actuating motor (40), a kinematic transmission chain (20) arranged between said actuating motor (40) and a terminal member (30) for pushing/releasing the piston, means (53,54) for activating rotation of the motor in one direction or the other and means (52) for locking in position the shaft (41) of the motor (40), means (50) for controlling the device, and power supply batteries (80), said terminal pushing/release member (30) being in the form of a straight slider provided with a rack (31) able to mesh with a gearwheel (21) of the kinematic chain.

## Description

The present invention relates to a device controlling and actuating the piston of valves for shutting off the aperture supplying a fluid.

It is known in the technical sector relating to the temperature control of rooms that there exists the need to control the valves for opening/closing the heating bodies by means of control units for electrically sensing the ambient temperature, able to transmit a suitable command for opening/closing the said valves depending on the difference in temperature measured between the programmed temperature and the temperature actually sensed.

It is also known that said control units may send the command signals via radio to the valve which in its conventional structure must be such as to convert a rotational movement in both directions of the knob - performed by suitable actuators - into a straight movement for pushing/releasing the piston for shutting off the aperture for supply of the hot fluid to the heating body.

Although performing their function, said valves of the known type nevertheless have drawbacks which limit the possibility of use thereof and which arise mainly from the high power consumption which the known mechanical actuating devices - usually of the gearwheel/endless screw type - produce whenever the knob must be rotated during closing and in particular, during opening, when it is required to overcome the resistance of the kinematic transmission chain which envisages a high reduction ratio able to prevent the return movement of the knob once the desired position has been reached.

Since all the valves of this type must be powered by means of batteries, in order to avoid the need for complex electrical connections, the high consumption results in rapid depletion of said batteries and therefore interruption in the control and the need for frequent and costly replacement of the batteries.

In addition to this, the mechanisms of the known type are considerably noisy, this drawback being particularly serious in the case of heating bodies situated inside bedrooms.

The technical problem which is posed, therefore, is to provide a device for controlling and actuating the piston of valves for shutting off the supply aperture of heating bodies of the fluid recirculating type, which does not result in a high power consumption, so as to reduce the need to replace the power supply batteries, being at the same time particularly silent.

In connection with this problem it is also required that this device should have compact dimensions, be easy and inexpensive to produce and assemble and be able to be installed easily at the premises of any user, including on already existing valves, by means of normal standard connection means.

These results are achieved according to the present invention by a device for controlling and actuating the piston of valves for shutting off the aperture supplying a fluid, comprising a container provided with a connecting part able to be fitted to said valve, an electric actuating motor, a kinematic transmission chain arranged between said actuating motor and a terminal member for pushing/releasing the piston, means for activating rotation of the motor in one direction or the other and means for locking in position the shaft of the motor, means for controlling the device, and power supply batteries, said pushing/release member being in the form of a straight slider provided with a rack able to mesh with a gearwheel of the kinematic transmission chain.

Further details may be obtained from the following description of a non-limiting example of embodiment of the subject of the present invention, provided with reference to the accompanying drawings in which:
- Figure 1 shows a schematic view of the assembly consisting of radiator, device and sensor;
- Figure 2 shows a schematic exploded view of the device according to the present invention;
- Figure 3 shows a view, from above, of the device open; and
- Figure 4 shows a schematic block diagram of the device according to the invention and the circuit for controlling and maintaining the position of the pushing slider.

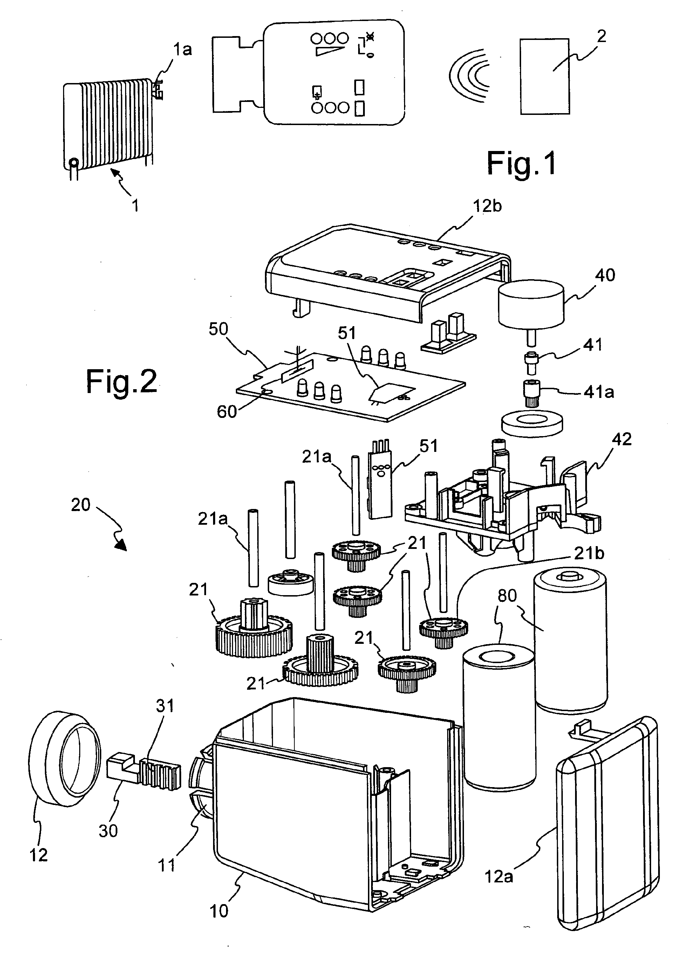

As shown in Fig. 1, the device according to the present invention is mounted on the valve 1a, with piston 1b, for shutting off the recirculating fluid of a heating radiator 1 and is able to receive radiofrequency signals from a temperature sensor 2, or similar sensing and programming device, arranged within the room whose temperature is to be controlled.

The device according to the invention comprises essentially:
- a container 10 which is suitably shaped and has at least one side integral with a connecting part 11 having elastically deformable lugs 11a and able to be fitted, by means of an associated ring 12, onto the thread of normal valves 1a with a piston 1b for shutting off the aperture supplying the fluid into radiators 1; the container envisages associated opening/closing covers 12a and 12b:

- a kinematic-chain transmission 20 with a predetermined multiplication/reduction ratio, comprising a plurality of gearwheels 21 which suitably mesh with each other and are mounted on respective actuating shafts 21a; said kinematic chain is arranged between a terminal member 30 for pushing/releasing the piston 1a and an actuating motor 40; means able to provide information on the position of the pushing member 30 in the example described consist of holes formed correspondingly in at least one of the gearwheels 21; and
- an electric motor 40 mounted on a support bracket 42 and having a drive shaft 41 connected to a toothed bush 41a which meshes with the first gearwheel 21;
- means 53,54 for activating rotation of the motor in one direction or the other and means 52 for locking in position the shaft of the motor 40;
- a control circuit 50 comprising a microprocessor 51 for processing the data received from the temperature sensor and controlling the actuating servomechanisms of the motor 40, means 51 for reading the angular position of one of the gearwheels 21; means for storing the data relating to the programmed operating conditions and means 60 for receiving the radiofrequency signals sent by the temperature sensor 2;
- a member 30 for pushing/releasing the piston 1a in the form of a straight slider provided with a rack 31 able to mesh with the last gearwheel 21 in the kinematic chain;
- power supply batteries 80.

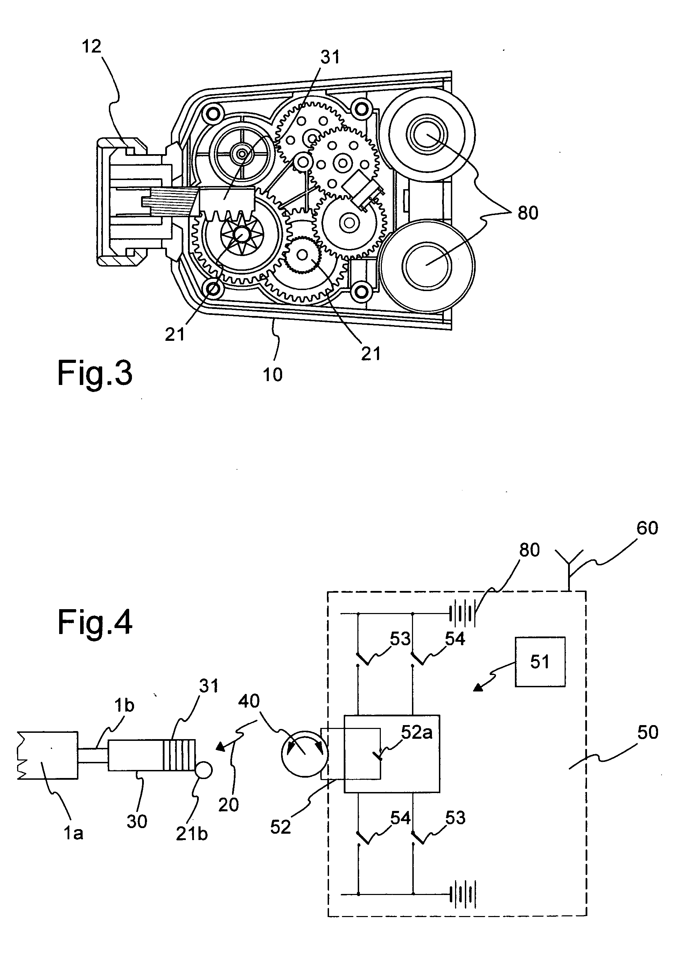

The remaining parts shown in the figures will not be described in detail since they are conventional per se. As shown in Fig. 4, the circuit 50 for controlling the motor 40 envisages a bridge arrangement of switches 53,54 which are alternately closed in a suitable sequence and corresponding order so as to determine the rotation in one direction or the other of the drive shaft 41; the figure also shows the means 52 for controlling and locking in position the straight slider 30 realized electrically by means of a short-circuit branch which is closed via two electronic switches 52a of the MOSFET type.

In this way it is possible to make use of the electromotive force which is produced inside the motor when it is actuated mechanically and which opposes the said mechanical action, causing the flow, inside the said motor via the short-circuit created by closing of the electronic switch formed by two MOSFET switches, of a current which would tend to reverse the direction of rotation.

With the structure described the operating principle of the device is as follows:
- the installation is prepared as shown in Fig. 1, switching on the device and storing the temperature control values in the sensor 2 and in the microprocessor 51 according to conventional procedures;
- when the sensor 2 sends a working signal to the device, the controller 51 processes the information and energises the motor 40 which causes the rotation, in a suitable direction of rotation (= opening/closing) of the kinematic chain of wheels 21;
- the last of said wheels, acting on the straight rack 31 of the slider 30, causes the displacement of the latter in one direction or the other and therefore the pushing/release of the piston 1b of the valve 1a of the radiator 1;
- when the optical reader 51 detects the programmed angular position of the gearwheel 21 provided with holes 21b, the control system stops the motor;
- said motor remains locked in position by the locking means 52,52a which oppose the return movement of the slider 30 pushed by the action of the spring associated with the piston 1b;
- in these conditions the device maintains its position until a new working signal of the sensor 2 reactivates the sequence described above.

It can therefore be seen how with the device according to the invention it is possible to solve all the problems of the known art, owing to the use of the straight cursor 30, with rack 31, which requires a very small amount of energy both when advancing/pushing the piston and when retracting/releasing it; during this operation the straight movement of the slider is in fact able to make use fully of the thrusting force of the spring on the said piston, correspondingly reducing the power to be drawn from the batteries and therefore increasing the working life thereof.

In addition the electric brake provided does not need to keep the motor under torque, allowing a further reduction in the power consumption and therefore resulting also in more silent operation compared to known devices.

Although the devices of the conventional type are normally of the ON/OFF type, it can be seen how the device according to the invention also allows a substantially continuous regulation of opening/closing of the valve by means of simple programming of the signal processing algorithms.

## Claims

1. Device for controlling and actuating the piston (1b) of valves (1a) for shutting off the aperture supplying a fluid, comprising a container (10) provided with a connecting part (11) able to be mounted on said valve (1a), an electric actuating motor (40), a kinematic transmission chain (20) arranged between said actuating motor (40) and a terminal member (30) for pushing/releasing the piston (1a), means (53, 54) for activating rotation of the motor in one direction or the other and means (52) for locking in position the shaft (41) of the motor (40), means (50) for controlling the device, and power supply batteries (80), **characterized in that** said pushing/release member (30) is in the form of a straight slider provided with a rack (31) able to mesh with a gearwheel (21) of the kinematic chain.

2. Device according to Claim 1, **characterized in that** said container comprises a connecting part (11) able to be fitted, by means of an associated ring (12), onto the thread of the valve (1a).

3. Device according to Claim 1, **characterized in that** said kinematic chain (20) comprises a plurality of gearwheels (21) which suitably mesh with each other and are mounted on respective support shafts (21a) .

4. Device according to Claim 3, **characterized in that** at least one of the gearwheels (21) of the kinematic chain is provided with means (21a) able to provide information on the angular position thereof.

5. Device according to Claim 4, **characterized in that** said position signalling means are holes (21b).

6. Device according to Claim 2, **characterized in that** said control circuit (50) comprises at least one microprocessor (51) for processing the data received from the temperature sensor (2) controlling the actuating servomechanisms of the motor (40), and means (51) for reading the angular position of at least one of the gearwheels (21); means for storing the data relating to the programmed operating conditions and means (60) for receiving the radiofrequency signals sent by the temperature sensor (2).

7. Device according to Claim 1, **characterized in that** said means (53,54) for activating rotation of the motor comprise a bridge arrangement of switches (53,54) which can be operated in a sequence and corresponding order so as to produce rotation of the drive shaft (41) in one direction or the other.

8. Device according to Claim 1, **characterized in that** said means (52) for locking in position the straight slider (30) comprise a branch of the circuit for supplying power to the motor (40), closed to form a short-circuit via two switches (52a).

9. Device according to Claim 8, **characterized in that** said switches (52a) are of the electronic type.

10. Device according to Claim 8, **characterized in that** said switches (52a) of the electronic type are made using MOSFET technology.
